# EUROPEAN PATENT APPLICATION

(11) **EP 4 778 658 A1**
(43) Date of publication of application: **22.07.2026**
(21) Application number: 25214489.4
(22) Date of filing: 10.11.2025
(51) Int. Cl.: B23D 45/16, B27B 9/02

(54) **CUTTING TOOL**

(30) Priority: 15.01.2025 CN 202510065349; 15.01.2025 CN 202510066396; 13.10.2025 CN 202511460779
(71) Applicant: Nanjing Chervon Industry Co., Ltd., Nanjing, Jiangsu 211106 (CN)
(72) Inventor: SHI, Diwen, Nanjing (CN); LV, Hong, Nanjing (CN)
(74) Representative: Sun, Yiming

(57) **Abstract**

Provided is a cutting tool. The cutting tool includes a bevel adjustment mechanism (140). The bevel adjustment mechanism (140) further includes an operating member (1411) connected to or formed with a limiting member (1413). Driven by the operating member (1411), the limiting member (1413) has at least a first state, a second state, and a third state. A bracket plate (142) includes a stop portion (1421) capable of being adapted to the limiting member (1413) in the first state or the second state to limit a first limit angle and a second limit angle of the sawing assembly (120) relative to the base (110). When the limiting member (1413) is in the third state, the bevel adjustment mechanism (140) limits the maximum lateral bevel angle of the sawing assembly (120) relative to the base (110) to a third limit angle. The first limit angle is less than the second limit angle.

## Description

### TECHNICAL FIELD

The present application relates to a power tool and, in particular, to a cutting tool.

### BACKGROUND

In the related art, a cutting tool can perform straight-line cutting on sheets of materials such as wood, plywood, aluminum, steel, and other metals. Generally speaking, the cutting tool allows a user to make straight, beveled, or non-beveled cuts in a workpiece.

This part provides background information related to the present application, and the background information is not necessarily the existing art.

### SUMMARY

The present application adopts the technical solutions below.

A cutting tool includes: a base including an upper surface and a lower surface that is opposite to the upper surface, where the lower surface defines a base plane; a sawing assembly including a circular saw blade defining a saw blade plane and a motor for driving the circular saw blade to rotate; and a bevel adjustment mechanism for adjusting the lateral bevel angle of the sawing assembly relative to the base between the minimum angle and the maximum allowable angle. The bevel adjustment mechanism includes a bracket plate connected to the sawing assembly to move with the sawing assembly. The bevel adjustment mechanism further includes a locking member operable to fix and release the bracket plate relative to the base at a desired lateral bevel angle; and an operating member connected to or formed with a limiting member. Driven by the operating member, the limiting member has at least a first state, a second state, and a third state. The bracket plate includes a stop portion capable of being adapted to the limiting member in the first state or the second state to limit a first limit angle and a second limit angle of the sawing assembly relative to the base. When the limiting member is in the third state, the bevel adjustment mechanism limits the maximum lateral bevel angle of the sawing assembly relative to the base to a third limit angle. The first limit angle is less than the second limit angle.

In some examples, the first limit angle is less than 45°.

In some examples, the third limit angle is greater than or equal to 46° and less than or equal to 60°.

In some examples, the second limit angle is less than the third limit angle.

In some examples, a battery pack for supplying power to at least the motor is further included.

In some examples, the operating member includes a knob, and a region near the operating member includes at least three angle marks for indicating limit angles.

In some examples, the locking member is disposed on the outer periphery of the operating member.

In some examples, the operating member rotates about a second axis to select a limit angle of the sawing assembly relative to the base.

In some examples, the limiting member includes a first protrusion and a body portion, the body portion is basically a flat plate structure, and the first protrusion protrudes from the body portion along the direction of the second axis.

In some examples, the stop portion mates with the first protrusion at different positions to limit the first limit angle and the second limit angle of the sawing assembly relative to the base.

In some examples, the locking member is connected to a locking rod, and when the limiting member is in the third state, the locking rod is limited by one end of an arc-shaped sliding groove on the bracket plate to limit the third limit angle of the sawing assembly relative to the base.

In some examples, when the limiting member is in the third state, the stop portion is disengaged from the limiting member.

In some examples, the bevel adjustment mechanism further includes a base plate fixedly connected to the base, and the operating member is operably disposed on the base plate.

In some examples, the base plate is provided with joining portions for limiting a switching device to three states, respectively.

In some examples, the sawing assembly is movably connected to the base between a first position and a second position, the circular saw blade at the first position does not protrude from the lower surface of the base, and the circular saw blade at the second position protrudes from the lower surface of the base; where the cutting tool further includes a biasing member disposed between the sawing assembly and the base to bias the sawing assembly toward the first position.

A cutting tool includes: a base including an upper surface and a lower surface that is opposite to the upper surface, where the lower surface defines a base plane; a sawing assembly including a circular saw blade defining a saw blade plane, where the sawing assembly is movably connected to the base between a first position and a second position, where the circular saw blade at the first position does not protrude from the lower surface of the base, and the circular saw blade at the second position protrudes from the lower surface of the base; a biasing member disposed between the sawing assembly and the base to bias the sawing assembly toward the first position; and a bevel adjustment mechanism configured to adjust the lateral bevel angle of the sawing assembly relative to the base, where the bevel adjustment mechanism includes a bracket plate connected to the sawing assembly to move with the sawing assembly; and the bevel adjustment mechanism further includes a locking member operable to fix and release the bracket plate relative to the base at a desired lateral bevel angle. The bevel adjustment mechanism further includes an operating member configured to be operated by a user to select the limit lateral bevel angle of the sawing assembly relative to the base, where the peripheral region of the operating member includes at least three angle marks for indicating limit lateral bevel angles.

A cutting tool includes: a base including an upper surface and a lower surface that is opposite to the upper surface, where the lower surface defines a base plane; a sawing assembly including a circular saw blade defining a saw blade plane, where the sawing assembly is movably connected to the base between a first position and a second position, where the circular saw blade at the first position does not protrude from the lower surface of the base, and the circular saw blade at the second position protrudes from the lower surface of the base; a biasing member disposed between the sawing assembly and the base to bias the sawing assembly toward the first position; and a bevel adjustment mechanism for adjusting the lateral bevel angle of the sawing assembly relative to the base. The bevel adjustment mechanism further includes a switching device operable to have at least three states, where when the switching device is in different states, the allowed limit lateral bevel angles of the sawing assembly relative to the base are different.

In some examples, the switching device includes a first state and a second state, where in the first state, the maximum lateral bevel angle of the sawing assembly relative to the base is a first limit angle; and in the second state, the maximum lateral bevel angle of the sawing assembly relative to the base is a second limit angle; where the first limit angle is less than the second limit angle.

In some examples, the switching device includes a third state, where in the third state, the maximum lateral bevel angle of the sawing assembly relative to the base is a third limit angle; where the second limit angle is less than the third limit angle.

In some examples, the first limit angle is less than 45°, the third limit angle is greater than or equal to 46° and less than or equal to 60°, and the third limit angle is the maximum allowable lateral bevel angle of the sawing assembly relative to the base.

A circular saw includes: a base including an upper surface and a lower surface that is opposite to the upper surface, where the lower surface defines a base plane; a sawing assembly including a circular saw blade defining a saw blade plane, where the sawing assembly is movably connected to the base between a first position and a second position, where the circular saw blade at the first position does not protrude from the lower surface of the base, and the circular saw blade at the second position protrudes from the lower surface of the base; a trigger operated to control the rotation of the circular saw blade; and an insertion locking mechanism connected to the sawing assembly to allow the sawing assembly to move between the first position and the second position, where the insertion locking mechanism includes an actuator, and the actuator is operated to allow the trigger to be operated or prohibit the trigger from being operated. The insertion locking mechanism further includes a latch member linked with the actuator in response to the movement of the actuator and moving from a locked position to an unlocked position basically along the front and rear direction to allow the sawing assembly to move from the first position to the second position.

In some examples, the actuator is operated to move between a release position and a prohibition position to allow the trigger to be operated or prohibit the trigger from being operated.

In some examples, the release position and the prohibition position are arranged basically along a first direction, and the locked position and the unlocked position of the latch member are arranged basically along a second direction, where the first direction intersects with the second direction.

In some examples, a locking part configured to drive the latch member to move from the locked position to a saw blade replacement position is further included.

In some examples, when the latch member is at the saw blade replacement position, the sawing assembly is operated to switch from the first position to the third position to replace the circular saw blade.

In some examples, when the latch member is at the saw blade replacement position, the locking part restricts the actuator from switching from the prohibition position to the release position.

In some examples, a shaft lock linked with the latch member is further included.

In some examples, the locking part is operated to switch from a first state to a second state to drive the latch member to move to the saw blade replacement position while triggering the shaft lock to enter a motor locking state.

In some examples, when the locking part is switched to the first state, the latch member is reset to the locked position, the shaft lock is released and the motor enters the locking state, and the restriction of the locking part on the actuator is released.

A circular saw includes: a base including an upper surface and a lower surface that is opposite to the upper surface, where the lower surface defines a base plane; a sawing assembly including a circular saw blade defining a saw blade plane and a motor for driving the circular saw blade to rotate, where the sawing assembly is movably connected to the base between a first position and a second position, where the circular saw blade at the first position does not protrude from the lower surface of the base, and the circular saw blade at the second position protrudes from the lower surface of the base; a trigger operated to control the movement of the motor; and an insertion locking mechanism connected to the sawing assembly to allow the sawing assembly to move between the first position and the second position, where the insertion locking mechanism includes an actuator and a latch member, and the actuator is operated to prohibit the trigger from being operated or allow the trigger to be operated and to drive the latch member to move between a locked position and an unlocked position to allow the sawing assembly to switch between the first position and the second position. The circular saw further includes a locking part and a shaft lock linked with the latch member. The locking part is operated to switch from a first state to a second state to drive the latch member to move to a saw blade replacement position while triggering the shaft lock to enter a motor locking state. When the locking part switches from the first state to the second state, the actuator does not move.

In some examples, when the locking part is operated to switch from the second state to the first state, the actuator does not move.

A circular saw includes: a base including an upper surface and a lower surface that is opposite to the upper surface, where the lower surface defines a base plane; a sawing assembly including a circular saw blade and a motor for driving the circular saw blade to rotate, where the sawing assembly is movably connected to the base between a first position and a second position, where the circular saw blade at the first position does not protrude from the lower surface of the base, and the circular saw blade at the second position protrudes from the lower surface of the base; a switching element operated to control the motor; and an insertion locking mechanism connected to the sawing assembly to allow the sawing assembly to move between the first position and the second position, where the insertion locking mechanism includes an actuator operated to prohibit a switch from being activated or allow the switch to be activated and a latch member driven by the actuator to move from a locked position to an unlocked position to allow the sawing assembly to move to the second position. The circular saw further includes a locking part and a shaft lock. The locking part is operated to drive the latch member to move non-rotatably from the locked position to a saw blade replacement position and trigger the shaft lock to enter a motor locking state.

In some examples, a trigger that is operated by a user to activate the switching element is further included, and the actuator is operated to move between a release position and a prohibition position to allow the trigger to be operated or prohibit the trigger from being operated.

In some examples, the release position and the prohibition position are arranged basically along a first direction, and the locked position and the unlocked position of the latch member are arranged basically along a second direction, where the first direction intersects with the second direction.

In some examples, a locking part configured to drive the latch member to move from the locked position to the saw blade replacement position is further included; and when the latch member is at the saw blade replacement position, the sawing assembly is operated to switch from the first position to a third position to replace the circular saw blade.

In some examples, when the latch member is at the saw blade replacement position, the locking part restricts the actuator from switching from the prohibition position to the release position.

In some examples, the saw blade replacement position, the unlocked position, and the locked position of the latch member are arranged along the second direction.

In some examples, when the locking part is switched to a first state, the latch member is reset to the locked position, the shaft lock is released so that the motor enters the motor locking state, and the restriction of the locking part on the actuator is released.

In some examples, the locking part includes a second rotary shaft, a first locking protrusion, and a second locking protrusion, where the locking part rotates about the axis of the second rotary shaft, and the first locking protrusion and the second locking protrusion protrude radially outward from the second rotary shaft.

In some examples, the first locking protrusion is configured to restrict the actuator from moving from the prohibition position to the release position, and the second locking protrusion is configured to drive the latch member to move from the locked position to the saw blade replacement position.

### BRIEF DESCRIPTION OF DRAWINGS

FIG. 1 is a perspective view of a track saw assembly including a track saw and a track according to an example of the present application.
FIG. 2 is a structural view of a track saw according to an example of the present application from another angle.
FIG. 3 is a structural view of some structures according to an example of the present application, where a switching device is in a first state.
FIG. 4 is a schematic view of some structures in FIG. 3, where the lateral bevel angle between a sawing assembly and a base is a first limit angle.
FIG. 5 is a structural view according to an example of the present application, where a switching device is in a second state, and the lateral bevel angle between a sawing assembly and a base is a second limit angle.
FIG. 6 is a schematic view of some structures in FIG. 5, where the lateral bevel angle between a sawing assembly and a base is a second limit angle.
FIG. 7 is a schematic view of FIG. 6 from another angle.
FIG. 8 is a structural view of some structures according to an example of the present application, where a switching device is in a third state.
FIG. 9 is a schematic view of some structures in FIG. 8, where the lateral bevel angle between a sawing assembly and a base is a third limit angle.
FIG. 10 is a view illustrating the internal structure of a track saw according to an example of the present application from another angle, where a sawing assembly is at a first position.
FIG. 11 is a schematic view of some structures in FIG. 10 from another angle, mainly illustrating a depth indication portion.
FIG. 12 is a view illustrating the internal structure of a track saw according to an example of the present application from another angle.
FIG. 13 is a schematic view of some structures in FIG. 12 from another angle, mainly illustrating a depth indication portion.
FIG. 14 is a structural view of a track saw according to an example of the present application from another angle, where a sawing assembly is at a third position.
FIG. 15 is a structural view of FIG. 14 from another angle.
FIG. 16 is a view illustrating the internal structure in FIG. 14 from another angle.
FIG. 17 is a schematic view of some structures in FIG. 14, mainly illustrating a depth indication portion and a bracket plate.
FIG. 18 is a schematic view of some structures of a track saw according to an example of the present application, mainly illustrating a sawing assembly, a trigger, an insertion locking mechanism, a locking part, and a shaft lock.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

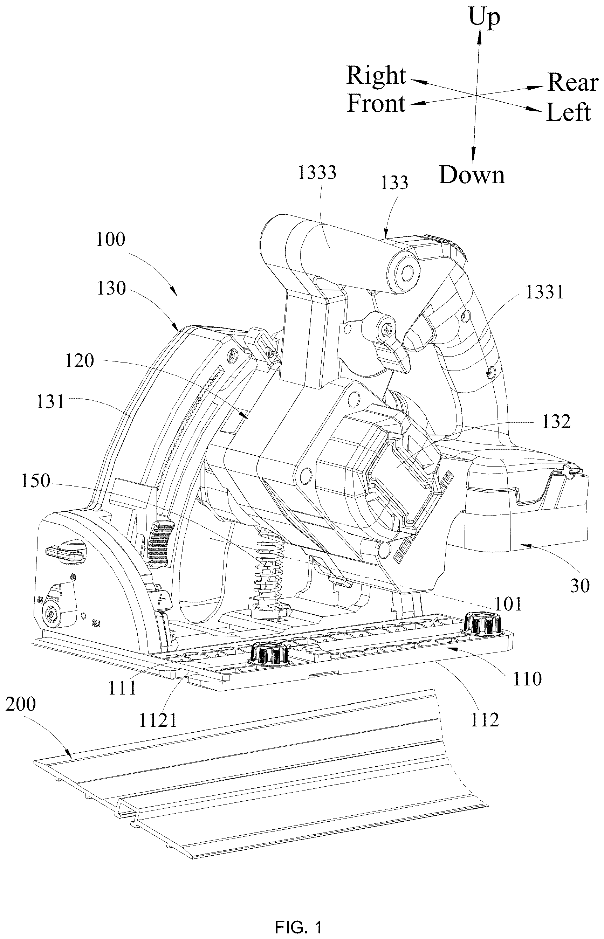

FIG. 1 shows a cutting tool in an example of the present application. In this example, the cutting tool is a track saw 100, and the track saw 100 is used together with a track 200. For example, the track saw 100 and the track 200 form a track saw assembly. The track saw assembly is placed on a workpiece. The track saw 100 is connected to a track body of the track 200 and translates along the longitudinal axis of the track 200 to make cuts in the workpiece. In some examples, the cutting tool may be a handheld circular saw. For example, the track saw 100 is a plunge circular saw, and the handheld circular saw is a traditional circular saw. For example, the handheld circular saw may be adapted to the track 200 to guide the handheld electric circular saw to perform cutting.

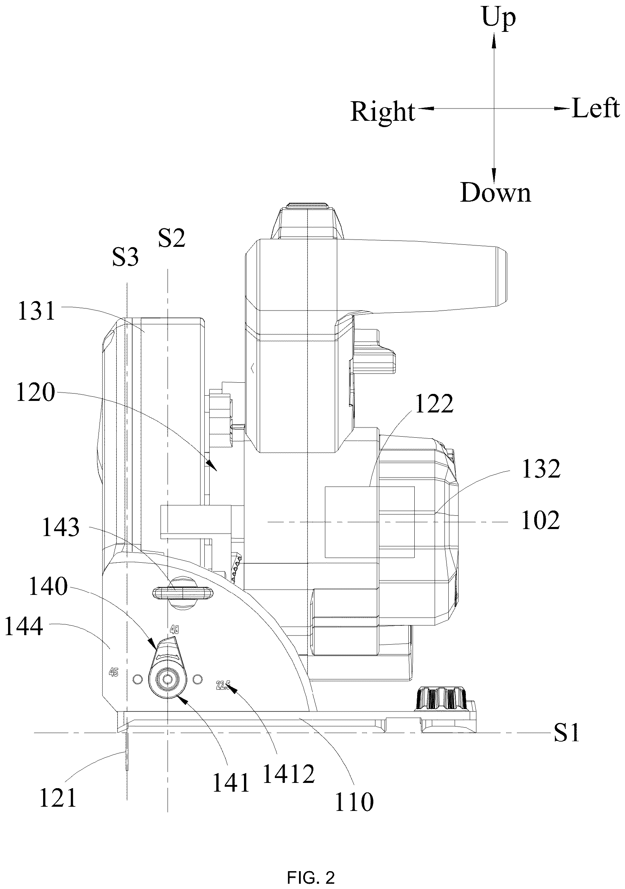

As shown in FIGS. 1 and 2, the track saw 100 is used as an example. Unless otherwise specified, directional terms such as front, rear, left, right, up, and down are all relative to the direction in which the track saw 100 is normally used. For example, the forward direction of the track saw 100 is defined as front, the direction opposite to the forward direction of the track saw 100 is defined as rear, the plunge direction of the track saw 100 is defined as down, and the direction opposite to the plunge direction is defined as up.

As shown in FIG. 1, the track saw 100 includes a power supply 30. In this example, the power supply 30 is a direct current power supply. The direct current power supply provides electrical energy for the track saw 100. For example, the direct current power supply is a rechargeable battery pack, and the battery pack mates with a corresponding power circuit to power the track saw 100. It is to be understood by those skilled in the art that the power supply 30 is not limited to the direct current power supply, and the corresponding components in the machine may be powered through mains power or an alternating current power supply in conjunction with corresponding rectifier, filter, and voltage regulator circuits. In the subsequent description, the battery pack 30 is used instead of the power supply, which cannot be construed as limiting the present application.

The battery pack 30 may be a lithium battery pack, a solid-state battery pack, or a pouch battery pack. In some examples, when the power supply includes multiple battery packs 30, the battery packs 30 may be of the same type or different types. In some examples, the electrical parameters, structural parameters, and physical parameters of the multiple battery packs 30 may be the same or different.

The track saw 100 further includes a base 110, a sawing assembly 120, and a housing assembly 130. The base 110 includes an upper surface 111 and a lower surface 112 that is opposite to the upper surface 111. The sawing assembly 120 includes a circular saw blade 121 for cutting a plane and a motor 122 for driving the circular saw blade 121 to rotate. In some examples, the sawing assembly 120 further includes a gear train or transmission system (not shown) disposed between the motor 122 and the circular saw blade 121 and configured to adjust the torque transmitted to the circular saw blade 121. In this example, the battery pack 30 provides a source of energy for at least the motor 122.

The housing assembly 130 includes a saw blade housing 131, a motor housing 132, and a grip part 133, the saw blade housing 131 accommodates at least part of the circular saw blade 121, and the motor housing 132 accommodates the motor 122. In this example, the saw blade housing 131 and the motor housing 132 also belong to the sawing assembly 120. In some examples, the motor housing 132 also accommodates the gear train or transmission system. The grip part 133 is connected to the motor housing 132 where the motor 122 is located, and the movement of the grip part 133 can drive the motor 122 to move. The motor 122 is drivingly connected to the circular saw blade 121, so the movement of the grip part 133 can also drive the circular saw blade 121 to move. In this example, the grip part 133 includes a first handle 1331, the battery pack 30 is detachably mounted at one end of the first handle 1331, and the other end of the first handle 1331 is formed on or connected to the motor housing 132. As can be seen below, the housing assembly and the sawing assembly in this example may share some structures. Therefore, the present disclosure is not intended to limit the preceding devices to completely independent parts.

The sawing assembly 120 is movably connected to the base 110 between a first position (shown in FIG. 1) and a second position (shown in FIG. 2). In this example, the sawing assembly 120 swings about a plunge axis 101 relative to the base 110, and the sawing assembly 120 rotates about the plunge axis 101. The first position is a position where the sawing assembly 120 is farther from the base 110, and the second position is a position where the sawing assembly 120 is closer to the base 110. When the sawing assembly 120 is at the first position, the circular saw blade 121 does not protrude from the lower surface 112 of the base 110. When the sawing assembly 120 is at the second position, the circular saw blade 121 at least partially protrudes from the lower surface 112 of the base 110. That is, the present application defines the position where the circular saw blade 121 does not protrude from the lower surface 112 as the first position and defines the position where the circular saw blade 121 protrudes from the lower surface 112 as the second position. The second position is not limited to a fixed position. Optionally, when the circular saw blade 121 protrudes from the lower surface 112, the sawing assembly 120 enters the range of the second position. FIG. 1 shows that the sawing assembly 120 is at the first position, and FIG. 2 shows that the sawing assembly 120 is at the second position. When the sawing assembly 120 is at the first position, the entire circular saw blade 121 is accommodated in the saw blade housing 131 and cannot perform cutting. The first position is a non-working position of the sawing assembly 120. When the sawing assembly 120 is at the second position, the circular saw blade 121 at least partially protrudes from the saw blade housing 131 and the lower surface 112 to implement a cutting function. For example, the grip part 133 is operable by the user to switch the circular saw blade 121 from the first position to the second position.

The track saw 100 further includes a biasing member 150 disposed between the sawing assembly 120 and the base 110 and used for connecting the sawing assembly 120 to the base 110 to bias the sawing assembly 120 toward the first position. Optionally, the biasing member 150 includes an elastic element. When the user does not hold the grip part 133 for operation, the biasing member 150 applies an elastic force to the sawing assembly 120 to bias the sawing assembly 120 toward the first position. When the user holds and moves the grip part 133 to move the sawing assembly 120 toward the second position, the biasing member 150 is compressed. The user needs to continue pressing the grip part 133 to move the sawing assembly 120 to the second position to perform cutting. After the user releases the grip part 133, the sawing assembly 120 is restored from the second position to the first position based on the elastic action of the biasing member 150.

In this example, when the sawing assembly 120 is at the first position, the battery pack 30, the sawing assembly 120, the housing assembly 130, and the biasing member 150 are separately disposed above the upper surface 111. The base 110 can be adapted to work with the track 200. The base 110 includes a slot 1121 that is on the lower surface 112 and matches the track 200 so that the track saw 100 can be placed on the track 200 for sliding and cutting. In addition, the track saw 100 may also be placed directly on other planes, which is not limited in the present application.

As shown in FIG. 2, the lower surface 112 of the base 110 is defined as a base plane S1, the base plane S1 is parallel to an upper surface of the workpiece, and a first reference plane S2 extends vertically upward from the base plane S1. The motor 122 includes a drive shaft rotatable about a first axis 102. For example, the first axis 102 passes through the first reference plane S2. Optionally, the first axis 102 is perpendicular to the first reference plane S2. Optionally, the first axis 102 intersects with the first reference plane S2. In this example, a saw blade plane S3 is defined as the plane defined by the circular saw blade 121.

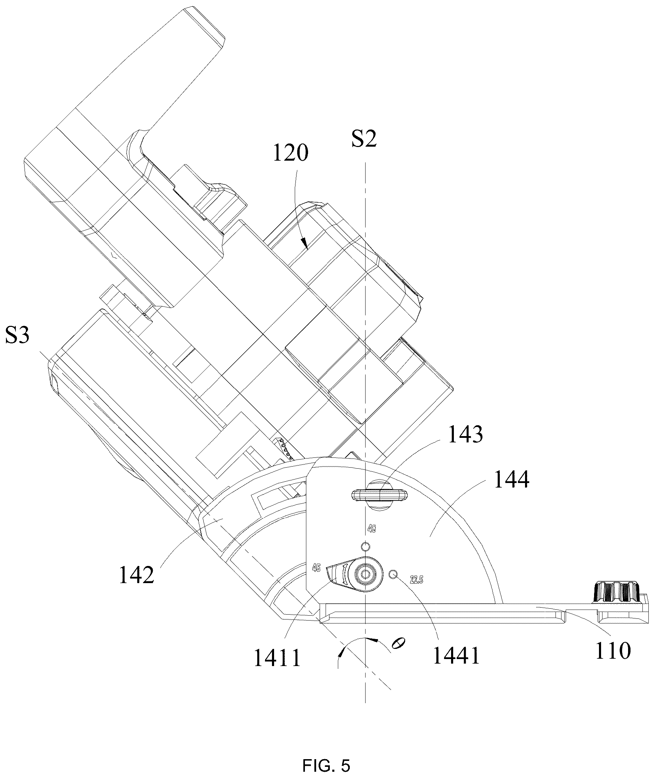

As shown in FIGS. 2 to 9, a bevel adjustment mechanism 140 is further included for adjusting a lateral bevel angle θ of the sawing assembly 120 relative to the base 110 between the minimum angle and the maximum allowable angle. As shown in FIGS. 2 and 5, the lateral bevel angle θ of the sawing assembly 120 relative to the base 110 is defined as the included angle between the saw blade plane S3 and the first reference plane S2. The bevel adjustment mechanism 140 is operable to adjust the included angle between the saw blade plane S3 and the first reference plane S2. For example, the bevel adjustment mechanism 140 includes a switching device 141 operable to have at least three states. When the switching device 141 is in different states, the allowed limit lateral bevel angle of the sawing assembly 120 relative to the base 110 varies. When the switching device 141 is in different states, the allowed limit lateral bevel angle of the saw blade plane S3 relative to the base plane S1 varies. When the switching device 141 is in different states, the preset limit angle of the circular saw blade 121 relative to the base 110 varies. When the circular saw blade 121 needs to be adjusted to the preceding preset limit angle, the switching device 141 is set to the corresponding state, the limit angle of the sawing assembly 120 or the circular saw blade 121 is limited, and the user adjusts the sawing assembly 120 to rotate to the rotation limit position. In this example, the switching device 141 has at least three states, and at least three lateral bevel angles θ for quick positioning exist between the sawing assembly 120 and the base 110. The lateral bevel angle θ between the sawing assembly 120 and the base 110, that is, the included angle between the saw blade plane S3 and the first reference plane S2, represents the bevel angle of the circular saw blade 121 on the workpiece. The track saw 100 has at least three bevel angles for quick positioning. The angle adjustment is simple and quick. The user only needs to adjust the state of the switching device 141 to quickly position the lateral bevel angle θ of the sawing assembly 120 to change the bevel angle of the track saw 100. Moreover, since the allowable limit angles of the sawing assembly 120 relative to the base 110 in different states of the switching device 141 are the preset angles, compared with manual alignment and adjustment by the user, the preset angles are factory-calibrated, and the bevel angles are more accurate to prevent errors in the bevel angles caused by differences in user's operating levels.

With continued reference to FIGS. 2 to 9, the bevel adjustment mechanism 140 includes a bracket plate 142 and a locking member 143, and the bracket plate 142 is connected to the sawing assembly 120 to move with the sawing assembly 120. The locking member 143 is operable to fix and release the bracket plate 142 relative to the base 110 at a desired lateral bevel angle. The switching device 141 includes an operating member 1411, and the operating member 1411 is configured to be operated by the user to select the limit angle of the sawing assembly 120 relative to the base 110. By adjusting the shape, position, or form of the operating member 1411, the switching device 141 can be switched between different states. As shown in FIGS. 2 and 5, the peripheral region of the operating member 1411 includes at least three angle marks 1412 for indicating the limit lateral bevel angles. In some alternative examples, if the switching device 141 has more states, the peripheral region of the operating member 1411 includes more angle marks 1412 for indicating the limit angles. It is to be understood that the peripheral region of the operating member 1411 refers to this region and is not limited to the operating member 1411, and this region may be on the component for mounting or supporting the operating member 1411 or may be on the component directly or indirectly connected to the operating member 1411. This region may be on a visible exterior surface; or this region may be on a non-visible exterior surface, but the angle marks can be observed through a window opened on the visible exterior surface. By providing the angle marks 1412, it is convenient for the user to quickly position and clearly adjust the angles.

The bevel adjustment mechanism 140 further includes a base plate 144 fixedly connected to the base 110. The switching device 141 is operably disposed on the base plate 144. For example, the operating member 1411 is disposed on the base plate 144. In this example, the angle marks 1412 are disposed on the outer surface of the base plate 144. The base plate 144 is perpendicular to the upper surface 111 of the base 110 and extends along the up and down direction. Optionally, the base plate 144 is perpendicular to a plane where the longitudinal axis of the track 200 is located. The bracket plate 142, the locking member 143, the operating member 1411, and the base plate 144 match each other. In this example, the bevel adjustment mechanism 140 is at least disposed at the front end of the base 110. Optionally, the bevel adjustment mechanism 140 is at least disposed at the rear end of the base 110. Optionally, the bevel adjustment mechanism 140 is at least disposed at the front end or the rear end of the base 110. Optionally, the base plate 144 is fixedly connected to the front end of the base 110. Optionally, the base plate 144 is fixedly connected to the rear end of the base 110. Optionally, the base plate 144 is fixedly connected to the front end and the rear end of the base 110. Optionally, the locking member 143 is connected to the front end of the base 110. Optionally, the locking member 143 is connected to the rear end of the base 110. Optionally, the locking member 143 is connected to the front end or the rear end of the base 110.

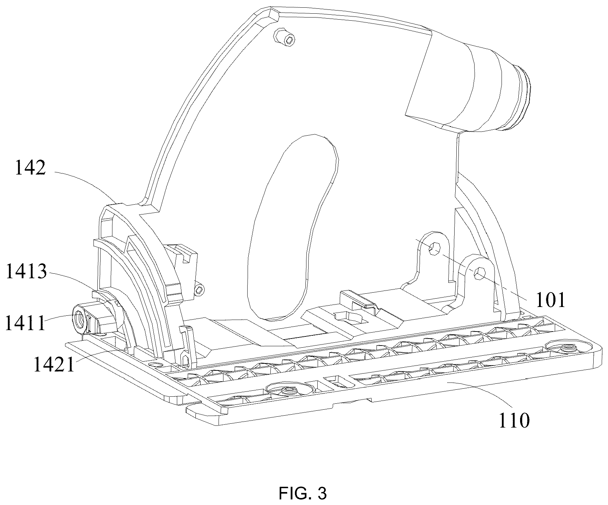

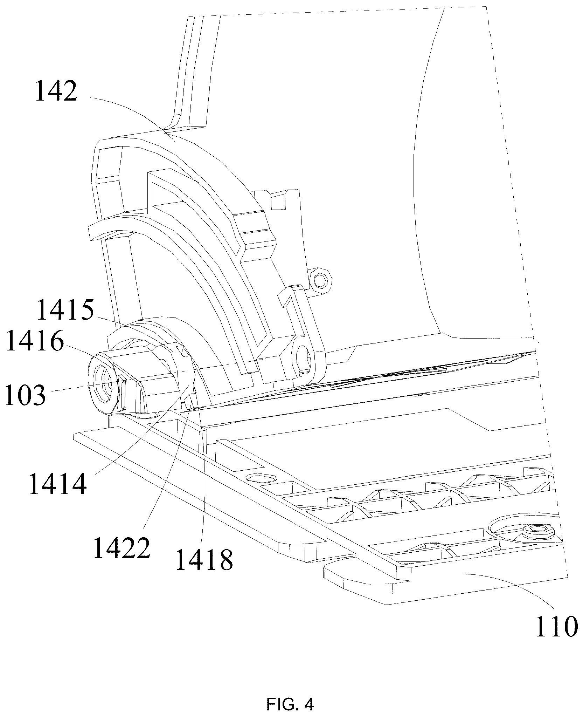

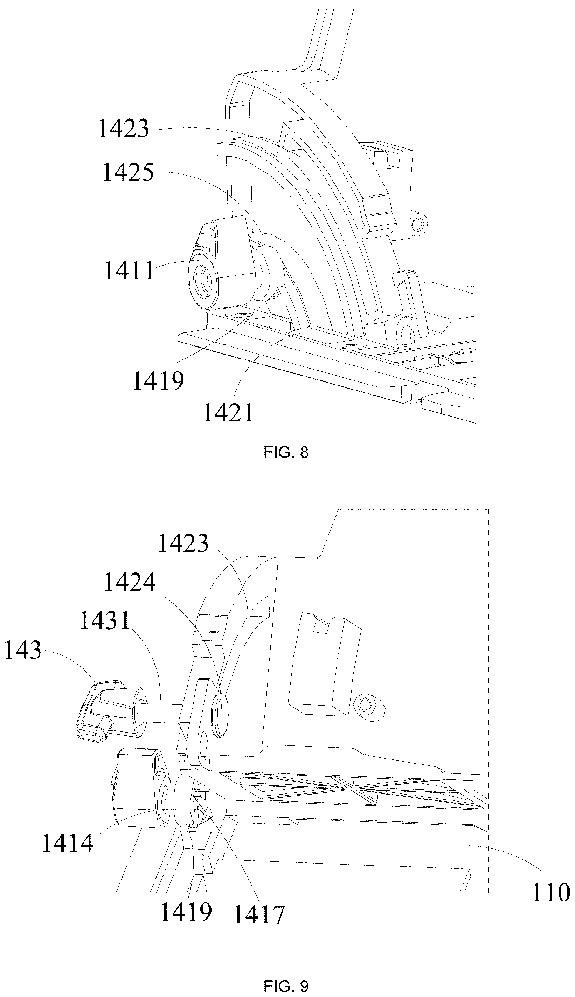

As shown in FIGS. 3 to 7, the switching device 141 has a first state and a second state. As shown in FIGS. 3 and 4, in the first state, the maximum lateral bevel angle of the sawing assembly 120 relative to the base 110 is a first limit angle. As shown in FIGS. 5 to 7, in the second state, the maximum lateral bevel angle of the sawing assembly 120 relative to the base 110 is a second limit angle. The first limit angle is less than the second limit angle. For example, the first limit angle is less than 45°. Optionally, the first limit angle is less than 40°. Optionally, the first limit angle is less than 35°. Optionally, the first limit angle is less than 30°. Optionally, the first limit angle is 22.5°. As shown in FIGS. 8 and 9, the switching device 141 further has a third state. In the third state, the maximum lateral bevel angle of the sawing assembly 120 relative to the base 110 is a third limit angle. The second limit angle is less than the third limit angle. Optionally, the third limit angle is greater than or equal to 46° and less than or equal to 60°. Optionally, the third limit angle is 48°. In this example, the third limit angle is the maximum lateral bevel angle allowed by the track saw 100. In this example, at least three lateral bevel angles corresponding to different states are set, and the three different lateral bevel angles basically cover the bevel angles commonly used by the user, which is in line with user habits.

The operating member 1411 is formed with or connected to a limiting member 1413. The limiting member 1413 has at least a first state, a second state, and a third state when driven by the operating member 1411. For example, when driven by the operating member, the limiting member 1413 has at least the first state corresponding to the first state of the switching device 141, the second state corresponding to the second state of the switching device 141, and the third state corresponding to the third state of the switching device 141. Optionally, different states of the limiting member 1413 correspond to different states of the switching device 141. The bracket plate 142 includes a stop portion 1421 adapted to the limiting member 1413 in the first state or the second state to limit the first limit angle and the second limit angle of the sawing assembly 120 relative to the base 110.

With continued reference to FIGS. 3 to 9, the operating member 1411 includes a knob 1416. The user operates the knob 1416 to rotate about a second axis 103 to select the limit angle of the sawing assembly 120 relative to the base 110. The limiting member 1413 is connected to the knob 1416. Optionally, the limiting member 1413 is coaxial with the knob 1416, and the limiting member 1413 is guided by the operating member 1411 to rotate about the second axis 103 and has the first state corresponding to the first state of the switching device 141, the second state corresponding to the second state of the switching device 141, and the third state corresponding to the third state of the switching device 141. For example, the position of the operating member 1411 changes to switch the switching device 141 between different states. The operating member 1411 includes a first position corresponding to the first state, a second position corresponding to the second state, and a third position corresponding to the third state. The limiting member 1413 includes a first protrusion 1414 and a body portion 1415. The body portion 1415 is basically a flat plate structure. The first protrusion 1414 protrudes from the body portion 1415 along the direction of the second axis 103. For example, the body portion 1415 extends along the radial direction of the second axis 103, and the body portion 1415 is basically a disc-shaped structure with the second axis 103 as the center. The first protrusion 1414 extends along the circumferential direction of the body portion 1415 to form a certain length, extends along the axial direction of the body portion 1415 to form a certain height, and extends along the radial direction of the body portion 1415 to form a certain thickness. In other examples, the first protrusion 1414 may be a protrusion structure with other regular or irregular shapes.

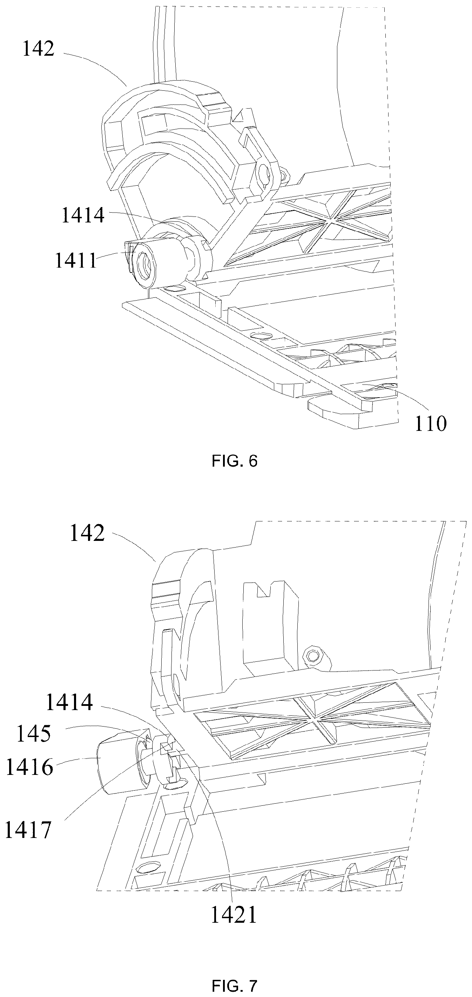

The stop portion 1421 of the bracket plate 142 is adapted to the first protrusion 1414 in the first state or the second state. For example, as shown in FIG. 4, the stop portion 1421 includes a second protrusion 1422 protruding from the bracket plate 142 toward the first protrusion 1414. In this example, the stop portion 1421 mates with the first protrusion 1414 at different positions to limit the first limit angle and the second limit angle of the sawing assembly 120 relative to the base 110. For example, the first protrusion 1414 includes a first side surface 1417 (as shown in FIG. 7) closer to the center of the circle and a second side surface 1418 (as shown in FIG. 4) opposite to the first side surface 1417. When the switching device 141 is in the first state, the second protrusion 1422 is limited by the second side surface 1418 of the first protrusion 1414 so that the bracket plate 142 cannot continue rotating, thereby limiting the included angle of the sawing assembly 120 relative to the base 110 to the first limit angle. When the switching device 141 is in the second state, the second protrusion 1422 is limited by the first side surface 1417 of the first protrusion 1414 so that the bracket plate 142 cannot continue rotating, thereby limiting the included angle of the sawing assembly 120 relative to the base 110 to the second limit angle. In other alternative examples, when the switching device 141 is in the first state, the first side surface 1417 is limited by the second protrusion 1422; and when the switching device 141 is in the second state, the second side surface 1418 is limited by the second protrusion 1422. The above does not limit the substantive content of the present application.

As shown in FIGS. 8 and 9, when the switching device 141 is in the third state, the stop portion 1421 is disengaged from the limiting member 1413, that is, when the limiting member 1413 is in the third state, the stop portion 1421 does not play a role in limiting the third limit angle of the sawing assembly 120 relative to the base 110. For example, the limiting member 1413 further includes a through groove 1419. When the limiting member 1413 is in the third state, the stop portion 1421 enters the through groove 1419 of the limiting member 1413 as the bracket plate 142 rotates. The through groove 1419 accommodates the stop portion 1421, and the stop portion 1421 can be displaced in the through groove 1419 so that the stop portion 1421 does not limit the movement of the sawing assembly 120 relative to the base 110. For example, when the operating member 1411 is operated to the third position, one side of the through groove 1419 is aligned with the second protrusion 1422 of the stop portion 1421 or aligned with the movement trajectory of the second protrusion 1422 so that the limiting member 1413 is disengaged from the stop portion 1421.

The bracket plate 142 further includes an arc-shaped sliding groove 1423, and the locking member 143 is connected to a locking rod 1431. When the limiting member 1413 is in the third state, the locking rod 1431 is limited by one end of the arc-shaped sliding groove 1423 to limit the third limit angle of the sawing assembly 120 relative to the base 110. In this example, the locking rod 1431 passes through the arc-shaped sliding groove 1423, an axial limiting end 1424 is disposed at one end of the locking rod 1431 passing through the arc-shaped sliding groove 1423, and the axial limiting end 1424 limits the axial displacement of the locking rod 1431 to reduce the axial movement of the locking rod 1431 moving in the arc-shaped sliding groove 1423. The bracket plate 142 further includes an arc-shaped guide rail 1425, and the second protrusion 1422 is disposed at one end of the arc-shaped guide rail 1425. The second protrusion 1422 protrudes from the arc-shaped guide rail 1425 in the direction of the second axis 103. In this example, the arc curve of the arc-shaped sliding groove 1423 and the arc curve of the arc-shaped guide rail 1425 are basically the same, and the arc-shaped sliding groove 1423 and the arc-shaped guide rail 1425 are basically in parallel. The arc-shaped sliding groove 1423 is disposed above the arc-shaped guide rail 1425.

The base plate 144 is disposed on the front side of the bracket plate 142, and the operating member 1411 and the locking member 143 separately pass through the base plate 144 and then mate with the bracket plate 142. The locking member 143 is disposed on the periphery of the operating member 1411. For example, the locking member 143 and the operating member 1411 are adjacent to each other to facilitate user operation. In this example, the operating member 1411 is disposed above the locking member 143.

As shown in FIG. 7, the operating member 1411 is formed with or connected to a positioning member 145, and the positioning member 145 positions and stops the operating member 1411 in the selected corresponding state. For example, the case where the operating member 1411 includes the knob 1416 rotating about the second axis 103 is used as an example. When the operating member 1411 is operated, the positioning member 145 stops and keeps the operating member 1411 at the first position, the second position, or the third position. The positioning member 145 includes a positioning ball, a positioning pin, or other structures that can protrude from the surface of the operating member 1411. The base plate 144 is provided with joining portions 1441 that mate with the positioning member 145. The joining portions 1441 limit the switching device 141 to three states, respectively. When the positioning member 145 is located in the joining portion 1441, the operating member 1411 is positioned, stopped, and kept at the corresponding position. For example, the joining portion 1441 is a recessed structure for accommodating the positioning member 145, such as a groove for accommodating the positioning ball or positioning pin. For example, the positioning member 145 is movably connected relative to the surface of the operating member 1411. When the positioning member 145 is not engaged with the joining portion 1441, the positioning member 145 partially retracts into the surface of the operating member 1411, and the positioning member 145 slides on the base plate 144 or the positioning member 145 is disengaged from a positioning plate. When the positioning member 145 moves to the joining portion 1441, the positioning member 145 automatically enters the joining portion 1441, and the joining portion 1441 limits the displacement of the positioning member 145, thereby stopping and keeping the operating member 1411 at the current position. Optionally, the positioning member 145 further includes a biasing part, such as a spring, to enable the positioning member 145 to be movably connected relative to the surface of the operating member 1411.

It is to be understood that, in addition to the first limit angle, the second limit angle, and the third limit angle, the bevel adjustment mechanism 140 also has other adjustable lateral bevel angles to satisfy the user's usage requirements. The switching device 141 can switch between three states to achieve rapid switching of the preceding three limit angles (the first limit angle, the second limit angle, and the third limit angle), which does not limit the bevel adjustment mechanism 140 to only have the preceding three lateral bevel angles. For example, the bevel adjustment mechanism 140 adjusts the lateral bevel angle θ of the sawing assembly 120 relative to the base 110 within a range between 0° and 48°, that is, the included angle between the saw blade plane S3 and the first reference plane S2 is adjustable within the range between 0° and 48°.

As shown in FIG. 2, the track saw 100 is in an initial state. In this case, the lateral bevel angle θ of the sawing assembly 120 relative to the base 110 is 0°, that is, the included angle between the saw blade plane S3 and the first reference plane S2 is basically 0°. When the user needs to adjust the lateral bevel angle θ of the sawing assembly 120 relative to the base 110, the user unlocks the locking member 143 so that the bracket plate 142 can rotate relative to the base 110. If the lateral bevel angle θ needs to be adjusted to the first limit angle, such as 22.5°, as shown in FIGS. 3 and 4, the user adjusts the switching device 141 to the first state. For example, the operating member 1411 is rotated to the first position with the angle mark 1412. When the operating member 1411 reaches the first position, the positioning member 145 automatically stops and keeps the operating member 1411 at the first position. In this case, the limiting member 1413 is in the first state. The user pushes or rotates the sawing assembly 120, and the stop portion 1421 moves toward the limiting member 1413 until the stop portion 1421 is limited by the first protrusion 1414 of the limiting member 1413 so that the sawing assembly 120 cannot continue rotating. For example, the stop portion 1421 abuts against the second side surface 1418 of the first protrusion 1414. In this case, the lateral bevel angle θ of the sawing assembly 120 relative to the base 110 is the first limit angle. The locking member 143 is operated to fix the included angle between the sawing assembly 120 and the base 110.

As shown in FIGS. 5 to 7, if the lateral bevel angle θ needs to be adjusted to the second limit angle, such as 45°, the user adjusts the switching device 141 to the second state. For example, the operating member 1411 is rotated to the second position with the angle mark 1412. When the operating member 1411 reaches the second position, the positioning member 145 automatically stops and keeps the operating member 1411 at the second position. In this case, the limiting member 1413 is in the second state. The user pushes or rotates the sawing assembly 120, and the stop portion 1421 moves toward the limiting member 1413 until the stop portion 1421 is limited by the first protrusion 1414 of the limiting member 1413 so that the sawing assembly 120 cannot continue rotating. For example, the stop portion 1421 abuts against the first side surface 1417 of the first protrusion 1414. In this case, the lateral bevel angle θ of the sawing assembly 120 relative to the base 110 is the second limit angle. The locking member 143 is operated to fix the included angle between the sawing assembly 120 and the base 110. In this example, the first position and the second position are symmetrically arranged so that the stop portion 1421 can separately abut against the first side surface 1417 and the second side surface 1418 of the first protrusion 1414.

As shown in FIGS. 8 and 9, if the lateral bevel angle θ needs to be adjusted to the third limit angle, such as 48°, the user adjusts the switching device 141 to the third state. For example, the operating member 1411 is rotated to the third position with the angle mark 1412. When the operating member 1411 reaches the third position, the positioning member 145 automatically stops and keeps the operating member 1411 at the third position. In this case, the limiting member 1413 is in the third state. The stop portion 1421 is disengaged from the limiting member 1413, and the user pushes or rotates the sawing assembly 120. In this case, the stop portion 1421 moves toward the through groove 1419 of the limiting member 1413 and moves in the through groove 1419 of the limiting member 1413. The user pushes or rotates the sawing assembly 120, and the locking rod 1431 moves in the arc-shaped sliding groove 1423 until the locking rod 1431 is limited by one end of the arc-shaped sliding groove 1423, for example, the locking rod 1431 abuts against one end of the arc-shaped sliding groove 1423. In this case, the lateral bevel angle θ of the sawing assembly 120 relative to the base 110 is the third limit angle. The locking member 143 is operated to fix the included angle between the sawing assembly 120 and the base 110.

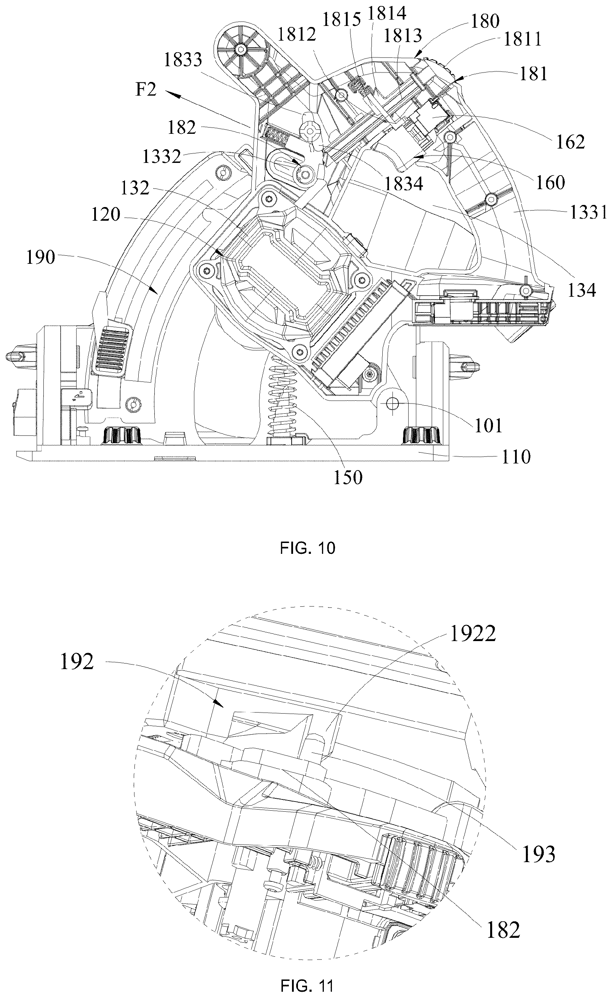

As shown in FIG. 10, the track saw 100 further includes a trigger 160 that is operated to control the rotation of the circular saw blade 121. For example, the trigger 160 includes a switching element 162 connected to the power supply 30, and the switching element 162 is operated to energize the motor 122 for movement. For example, the motor 122 includes a stator, a rotor, and a fan. The drive shaft is formed on or connected to the rotor, and the fan is formed on or connected to the drive shaft. When the drive shaft rotates, the fan is driven to rotate.

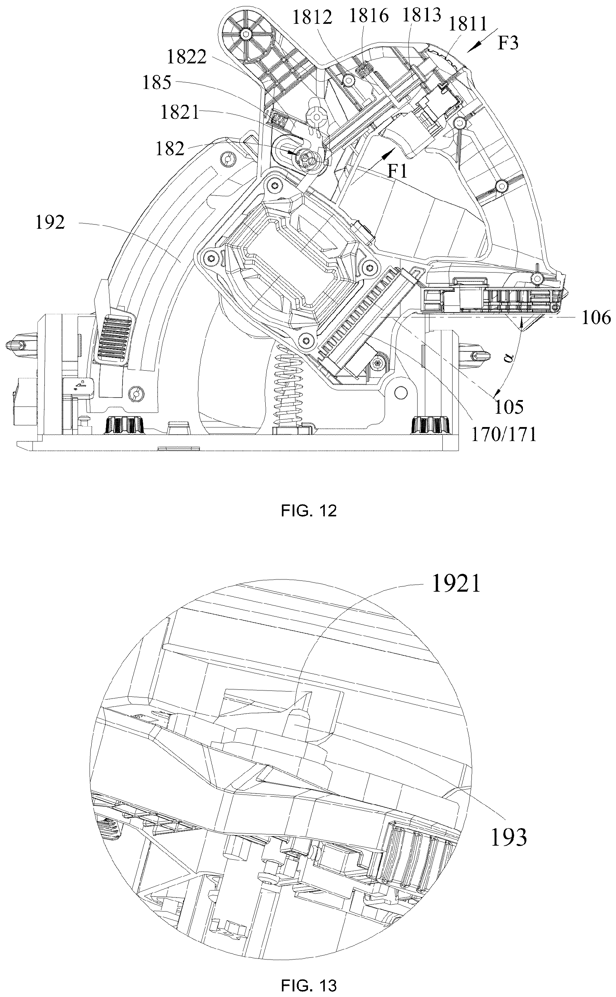

An insertion locking mechanism 180 is coupled to the sawing assembly 120 to allow the sawing assembly 120 to move between the first position and the second position. The insertion locking mechanism 180 includes an actuator 181 that is operated to allow the trigger 160 to be operated or prohibit the trigger 160 from being operated. The insertion locking mechanism 180 further includes a latch member 182 linked with the actuator 181 in response to the movement of the actuator 181. The latch member 182 moves from a locked position (indicated by the dashed line in FIGS. 10 and 12) to an unlocked position (indicated by the solid line in FIG. 12) basically along the front and rear direction to allow the sawing assembly 120 to move from the first position to the second position. It is to be explained that the movement along the front and rear direction means that the starting point of the movement, such as the locked position, and the end point of the movement, such as the unlocked position, are arranged along the front and rear direction, for example, the unlocked position is in front of the locked position. Optionally, the unlocked position is to the left front or to the right front of the locked position. Optionally, the unlocked position is at the front upper position or the front lower position of the locked position. Optionally, the latch member 182 moves linearly from the locked position to the unlocked position. Optionally, the latch member 182 moves curvilinearly from the locked position to the unlocked position. Optionally, the latch member 182 moves from the locked position to the unlocked position through a combination of linear and curvilinear motion. Optionally, the latch member 182 moves non-rotatably from the locked position to the unlocked position. The above is the content disclosed in this example.

In this example, the latch member 182 responds to the movement of the actuator 181, and the latch member 182 moves basically along the front and rear direction between the locked position and the unlocked position to lock or release the rotation of the sawing assembly 120, thereby ensuring the safety of the machine. Through the linkage of the actuator 181 and the latch member 182, the unlocking of the rotational movement of the sawing assembly 120 and the unlocking of the trigger 160 are simultaneously completed in one operation by the user, and the locking of the rotational movement of the sawing assembly 120 and the locking of the trigger 160 are also simultaneously completed. The latch member 182 moves basically along the front and rear direction between the locked position and the unlocked position, thereby making the overall space of the insertion locking mechanism 180 more compact. Compared with setting the latch member 182 to rotate, the movement along the front and rear direction saves more space, and the structure is simpler.

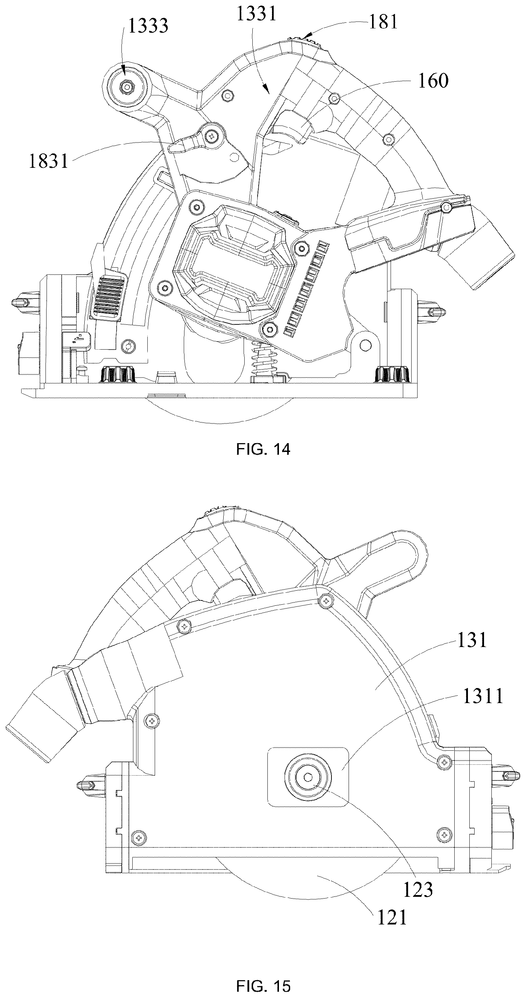

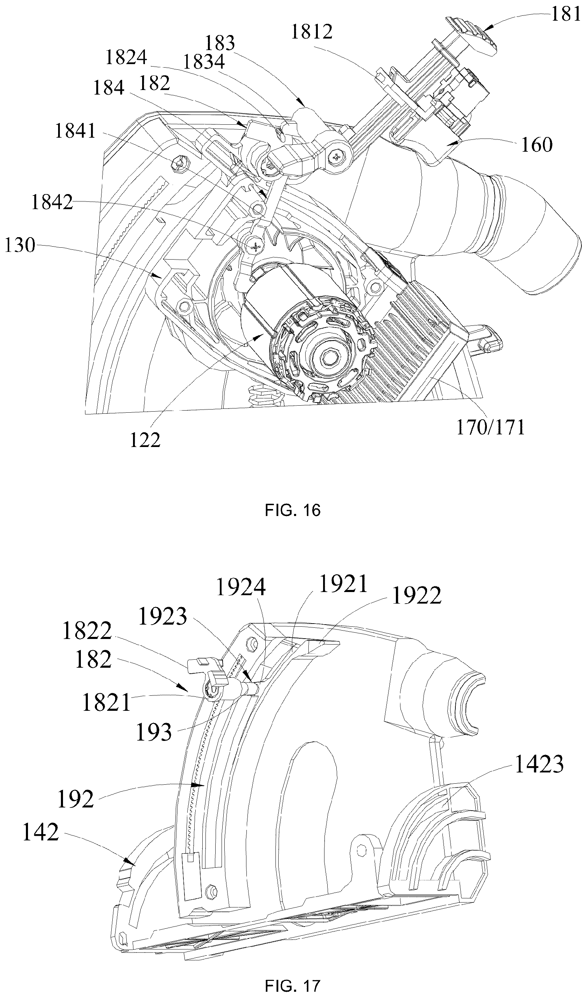

As shown in FIGS. 14 to 17, a locking part 183 and a shaft lock 184 are further included. The locking part 183 is operated to drive the latch member 182 to move non-rotatably from the locked position to a saw blade replacement position and trigger the shaft lock 184 to enter the locking state of the motor 122. The latch member 182 is linked with the shaft lock 184, and the locking part 183 is operated to switch from a first state (as shown in FIGS. 1 and 10) to a second state (as shown in FIGS. 14 and 16) to drive the latch member 182 to move to the saw blade replacement position while triggering the shaft lock 184 to enter the locking state of the motor 122. In this example, when the locking part 183 switches from the first state to the second state, the actuator 181 does not move. In this example, when the locking part 183 switches from the second state to the first state, the actuator 181 does not move.

As shown in FIG. 15, the sawing assembly 120 further includes a third position. When the sawing assembly 120 is at the third position, the circular saw blade 121 is allowed to be replaced. Optionally, when the sawing assembly 120 is at the third position, the center of the circular saw blade 121 enters a window 1311 opened on the saw blade housing 131. For example, the sawing assembly 120 further includes an output portion 123. The output portion 123 is used for mounting the circular saw blade 121. The output portion 123 is coaxial with the circular saw blade 121. When the sawing assembly 120 is at the third position, the output portion 123 enters the window 1311 opened on the saw blade housing 131 so that the user can replace the circular saw blade 121 conveniently. For example, the third position may be different from the first position, or the third position may be the same as the first position. For example, the third position of the sawing assembly 120 is within the range of the second position, that is, the third position is a state of the second position.

For example, the motor 122 is configured to drive the output portion 123 to rotate, the circular saw blade 121 and the output portion 123 rotate about an output axis 104, and the output axis 104 is parallel to, but not coincident with, the first axis 102. For example, the output axis 104 coincides with the first axis 102. For example, an included angle exists between the output axis 104 and the first axis 102. For example, the drive shaft is directly connected to the output portion 123, or the output portion 123 is formed on the drive shaft. For example, a gear train or transmission system is disposed between the drive shaft and the output portion 123.

In this example, the movement of the trigger 160, the movement of the sawing assembly 120, the activation of the shaft lock 184, and the operating position for replacing the circular saw blade 121 are controlled in a linked manner. The interlocking design improves the safety and operability of the entire machine.

As shown in FIGS. 12 and 13, the trigger 160 is disposed on the first handle 1331, the trigger 160 is at least partially disposed on the outer side of the housing of the first handle 1331 and is movably connected to the first handle 1331, and the trigger 160 moves relative to the housing of the first handle 1331 to activate or deactivate the switching element 162, thereby controlling the current of the motor 122. For example, the housing of the first handle 1331 and the motor housing 132 are connected and form a through hole 134 for accommodating at least the fingers. The insertion locking mechanism 180 is at least partially disposed within the grip part 133. Optionally, the insertion locking mechanism 180 is at least partially disposed within the first handle 1331. The insertion locking mechanism 180 is at least partially disposed within the motor housing 132. To ensure the compactness of the entire machine and the comfort of holding, the insertion locking mechanism 180 needs to be designed to be compact as a whole.

The actuator 181 includes a release position (as shown in FIG. 12) and a prohibition position (as shown in FIG. 10). The actuator 181 is operated to move between the release position and the prohibition position to allow the trigger 160 to be operated or prohibit the trigger 160 from being operated. For example, the actuator 181 includes a trigger portion 1811 at least partially exposed outside the housing and a trigger lock 1812. The trigger portion 1811 and the trigger lock 1812 are connected via a first linkage portion 1813. In this example, the trigger 160 and the trigger portion 1811 are disposed on two sides of the first handle 1331. Optionally, when the user holds the first handle 1331, the trigger 160 and the trigger portion 1811 are disposed within a region such that the trigger 160 and the trigger portion 1811 can be operated by one hand. For example, when the user's thumb operates the trigger portion 1811, at least the index finger among the remaining fingers can operate the trigger 160. In this example, the user presses the trigger 160 along a first direction F1 to activate the switching element 162 and presses the trigger portion 1811 along a third direction F3 opposite to the first direction F1 to drive the actuator 181 from the prohibition position to the release position. In this example, the prohibition position and the release position are basically arranged along the third direction F3. When the trigger portion 1811 is not operated, the trigger lock 1812 abuts against the trigger 160, and the trigger lock 1812 at least restricts the trigger 160 from moving and activating the switching element 162. For example, the trigger 160 cannot be pressed along the first direction F1. When the trigger portion 1811 is pressed along the third direction F3, the trigger lock 1812 is pushed or moved to disengage from the trigger 160 or the trigger lock 1812 is pushed or moved to release the restriction on the displacement of the trigger 160, and the trigger 160 is allowed to move and activate the switching element 162. In this case, when the user presses the trigger 160 along the first direction F1, the switching element 162 is activated, and the circuit between the motor 122 and the battery pack 30 is connected. For example, the first linkage portion 1813 includes a first pushing portion 1814, the trigger lock 1812 includes a first sliding portion 1815, the first pushing portion 1814 extends perpendicular to the first direction F1, and the length of the first pushing portion 1814 extending perpendicular to the first direction F1 varies along the first direction F1. Optionally, in the first direction F1, the length of the first pushing portion 1814 extending perpendicular to the first direction F1 increases gradually. The first sliding portion 1815 mates with the first pushing portion 1814. As the user presses the trigger portion 1811 along the third direction F3, the first pushing portion 1814 pushes the first sliding portion 1815 in a direction away from the trigger 160, thereby driving the trigger lock 1812 to move away from the trigger 160 until the trigger 160 is allowed to move and activate the switching element 162. In this example, the trigger lock 1812 is biased toward the trigger 160, and a biasing element is disposed within the housing of the first handle 1331. For example, the biasing element is a coil spring 1816, and the biasing element is energized when the trigger lock 1812 moves in a direction away from the trigger 160. When the user does not operate (for example, press) the trigger portion 1811, the biasing element releases energy to drive the trigger lock 1812 back to a position where the trigger 160 is prohibited from being operated and to simultaneously drive the trigger portion 1811 back to the initial position, with the actuator 181 being reset to the prohibition position.

For example, the track saw 100 further includes a depth indication portion 190 formed on or connected to the saw blade housing 131. For example, the depth indication portion 190 is disposed on a side surface of the saw blade housing 131 facing the motor 122. The depth indication portion 190 includes a marking portion (not shown), a first guide groove 192, and a sliding shaft 193. The marking portion (not shown) is a mark that indicates the cutting depth of the circular saw blade 121 into the lower surface 112 of the base 110. The first guide groove 192 includes a guide section 1921 and a limiting section 1922. When the sawing assembly 120 moves between the first position and the second position, the sliding shaft 193 moves in the guide section 1921 of the first guide groove 192. When the sawing assembly 120 is prohibited from cutting and rotating, the sliding shaft 193 is in the limiting section 1922. As shown in FIGS. 11, 13, and 17, the sliding shaft 193 is formed on or connected to the latch member 182. When the actuator 181 is at the prohibition position, the latch member 182 is at the locked position, and the sliding shaft 193 is in the limiting section 1922. When the user operates the grip part 133 to move the sawing assembly 120 in the plunge direction (for example, swing the sawing assembly 120 downward), the sliding shaft 193 is prohibited by the limiting section 1922 from moving, for example, the sliding shaft 193 abuts against the limiting section 1922. As shown in FIG. 13, when the actuator 181 is at the release position, the latch member 182 is at the unlocked position, and the sliding shaft 193 exits the limiting section 1922 and enters the guide section 1921 of the first guide groove 192. When the user operates the grip part 133 to rotate the sawing assembly about the plunge axis 101, the sliding shaft 193 slides in the guide section 1921 of the first guide groove 192 to allow the sawing assembly 120 to move between the first position and the second position.

In this example, the latch member 182 is linked with the actuator 181 in response to the movement of the actuator 181. When the actuator 181 is at the prohibition position, the latch member 182 is at the locked position, the trigger 160 is prohibited from being operated, and the rotation of the sawing assembly 120 is locked. When the actuator 181 is at the release position, the latch member 182 is at the unlocked position, the trigger 160 is allowed to be operated, and the rotation of the sawing assembly 120 is released.

For example, the latch member 182 includes a first cam 1821 and an extension portion 1822. The first cam 1821 is connected to the actuator 181. When the actuator 181 moves along the third direction F3, the first cam 1821 moves along a second direction F2. In this example, the locked position and the unlocked position are arranged front to back along the second direction F2. The sliding shaft 193 is formed on or connected to the first cam 1821. Optionally, the sliding shaft 193 is connected to the center of the first cam 1821, and a protruding portion 1823 of the first cam 1821 is connected to the actuator 181. In this example, the second direction F2 intersects with the first direction F1, and the protruding portion 1823 abuts against the actuator 181 so that when the actuator 181 reciprocates in the first direction F1, the first cam 1821 reciprocates in the second direction F2, and then the sliding shaft 193 reciprocates in the second direction F2. In this manner, through the operation of the actuator 181, the locking and unlocking of the trigger 160 and the locking and unlocking of the cutting movement of the sawing assembly 120 can be linked. Optionally, the first direction F1 is perpendicular to the second direction F2. Optionally, the limiting section 1922 and the guide section 1921 of the first guide groove 192 are basically arranged along the second direction F2. In this example, the latch member 182 is biased toward the locked position. Optionally, the extension portion 1822 of the latch member 182 extends along the second direction F2 and is connected to a first compression spring 185. The first compression spring 185 is compressed and released basically along the second direction F2. Compared with the latch member 182 biased by a torsion spring to swing, the latch member 182 biased by the first compression spring 185 is more convenient to assemble and has a simpler product structure design.

In this example, the housing of the first handle 1331 is provided with a second guide groove 1332 extending along the second direction F2, and the sliding shaft 193 passes through the second guide groove 1332 and is connected to the first guide groove 192. The first cam 1821 is disposed inside the housing of the first handle 1331. The first compression spring 185 is connected to the inner side of the housing of the first handle 1331.

As shown in FIG. 16, the latch member 182 further includes a saw blade replacement position. The latch member 182 is driven by the locking part 183 to move non-rotatably from the locked position to the saw blade replacement position. When the latch member 182 moves from the locked position to the saw blade replacement position, the latch member 182 triggers the shaft lock 184 to enter the motor locking state. The shaft lock 184 locks the rotation of the motor 122 so that when the user disassembles or assembles the circular saw blade 121 mounted on the output portion 123, the drive shaft is not driven to rotate, thereby preventing damage to the motor 122. In this example, when the latch member 182 is at the saw blade replacement position, the locking part 183 restricts the actuator 181 from switching from the prohibition position to the release position. In this example, the locking part 183 includes a first state (as shown in FIG. 10) and a second state (as shown in FIG. 16). When the locking part 183 switches from the first state to the second state, the locking part 183 drives the latch member 182 to move from the locked position to the saw blade replacement position. When the locking part 183 is switched to the second state, the trigger 160 is prohibited from being operated. For example, when the locking part 183 switches from the first state to the second state, the actuator 181 remains at the prohibition position and the actuator 181 does not move. For example, when the locking part 183 switches from the second state to the first state, the latch member 182 is reset to the locked position at least under the drive of the first compression spring 185. When the locking part 183 is switched to the second state, the restriction of the locking part 183 on the actuator 181 is released, and the actuator 181 is still at the prohibition position. When the locking part 183 switches from the second state to the first state, the actuator 181 does not move.

As shown in FIGS. 15 to 17, when the sawing assembly 120 is at the third position, the center of the circular saw blade 121 enters the window 1311 opened on the saw blade housing 131. In this example, as shown in FIG. 16, to enable the sawing assembly 120 to automatically stop at the third position from the first position or the second position, the first guide groove 192 is further provided with an assembly and disassembly limiting section 1923. After the sliding shaft 193 enters the assembly and disassembly limiting section 1923, the sawing assembly 120 is limited to the third position so that the center of the circular saw blade 121 enters the window 1311 opened on the saw blade housing 131, and the output portion 123 enters the window 1311 opened on the saw blade housing 131. For example, the assembly and disassembly limiting section 1923 is connected to the guide section 1921, and the sliding shaft 193 enters the assembly and disassembly limiting section 1923 after entering the guide section 1921. The assembly and disassembly limiting section 1923 includes an assembly and disassembly limiting groove 1924 that extends basically along the second direction F2 and protrudes from the guide section 1921. When the sliding shaft 193 enters the assembly and disassembly limiting groove 1924 from the guide section 1921, the assembly and disassembly limiting groove 1924 limits the sliding shaft 193 in the assembly and disassembly limiting groove 1924. In this case, the sawing assembly 120 is limited to the third position, and the sawing assembly 120 can no longer move in the plunge direction. For example, the saw blade replacement position of the latch member 182 is disposed in front of the unlocked position along the second direction F2. In this example, when the locking part 183 switches from the first state to the second state, the locking part 183 drives the latch member 182 to move along the second direction F2 to the saw blade replacement position.

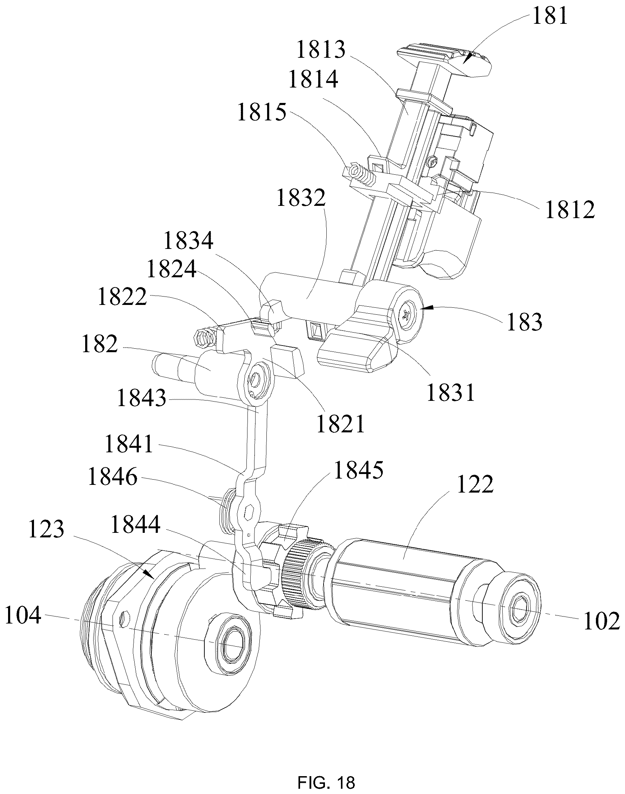

In this example, as shown in FIGS. 16 and 18, the shaft lock 184 includes a shaft locking rod 1841 and a first rotary shaft 1842. The shaft locking rod 1841 is connected to the housing assembly 130 via the first rotary shaft 1842. For example, the shaft locking rod 1841 is at least partially disposed within the motor housing 132. Optionally, the first rotary shaft 1842 is disposed within the motor housing 132. The first rotary shaft 1842 is disposed in the shaft locking rod 1841. The shaft locking rod 1841 includes a connection end 1843 disposed on one side of the first rotary shaft 1842 and an insertion end 1844 disposed on the other side of the first rotary shaft 1842. The connection end 1843 is connected to the latch member 182, and the insertion end 1844 may be inserted into a shaft locking groove 1845 formed on or connected to the motor 122. In this example, a shaft locking disc is disposed on the drive shaft of the motor 122, shaft locking grooves 1845 are arranged along the circumferential direction of the shaft locking disc, and the shaft locking grooves 1845 extend radially inwardly along the shaft locking disc to form grooves. When the shaft lock 184 is triggered to the locking state of the motor 122, the insertion end 1844 is inserted into the groove and remains inserted to restrict the rotation of the drive shaft of the motor 122. Optionally, the shaft locking grooves 1845 are evenly arranged along the circumferential direction. Optionally, the correspondence between the number of shaft locking grooves 1845 and the number of cogging torques per rotation of the rotor is established so that each time the electric motor is stopped, the insertion end 1844 can be aligned with at least one of the multiple shaft locking grooves 1845. In this example, the insertion end 1844 is inserted into the shaft locking groove 1845 along the radial direction of the drive shaft. In other alternative examples, the shaft locking groove 1845 is formed on the drive shaft. In other alternative examples, the shaft locking groove 1845 is formed on the fan of the motor 122. In other alternative examples, the shaft locking groove 1845 is formed on the gear train or transmission system. In this example, when the locking part 183 switches from the first state to the second state, the locking part 183 drives the latch member 182 to move along the second direction F2 to the saw blade replacement position, the latch member 182 drives the shaft locking rod 1841 to rotate through the connection end 1843, and the insertion end 1844 is inserted into the shaft locking groove 1845. When the locking part 183 switches from the second state to the first state, the latch member 182 is reset to the locked position at least under the drive of the first compression spring 185, the latch member 182 drives the shaft locking rod 1841 to rotate in the reverse direction through the connection end 1843, and the insertion end 1844 exits the shaft locking groove 1845. For example, to better reset the shaft locking rod 1841 so that the insertion end 1844 exits the shaft locking groove 1845, the shaft lock 184 further includes a biasing member 1846 that applies a biasing force to the shaft locking rod 1841, such as a torsion spring or another element that generates a biasing force. For example, the biasing member 1846 applies a biasing force to the shaft locking rod 1841 so that the shaft locking rod 1841 is displaced along with the displacement of the latch member 182. That is, the biasing member 1846 applies a biasing force to the shaft locking rod 1841 so that the shaft locking rod 1841 is kept in contact with the latch member 182.

In this example, by operating the locking part 183 to switch between the first state and the second state, the positioning of the assembly and disassembly position of the circular saw blade 121, the locking of the trigger 160, and the activation of the shaft lock 184 are linked together and can be achieved by one component, and all the assembly and disassembly conditions of the circular saw blade 121 are satisfied, thereby ensuring the safety of the user and improving the convenience of operation.

In this example, the locking part 183 is further connected to a lever handle 1831 provided outside the housing assembly 130 so that it is convenient for the user to switch the locking part 183 between the first state and the second state. The locking part 183 is disposed in the housing of the first handle 1331 and switches between the first state and the second state by rotating. The lever handle 1831 is disposed on the outer side of the housing of the first handle 1331. The locking part 183 includes a second rotary shaft 1832, a first locking protrusion 1833, and a second locking protrusion 1834, the locking part 183 rotates about the axis of the second rotary shaft 1832, and the first locking protrusion 1833 and the second locking protrusion 1834 protrude radially outward from the second rotary shaft 1832. The first locking protrusion 1833 is configured to restrict the actuator 181 from moving from the prohibition position to the release position, and the second locking protrusion 1834 is configured to drive the latch member 182 to move from the locked position to the saw blade replacement position. The latch member 182 is provided with a second boss 1824 that mates with the second locking protrusion 1834. The second boss 1824 receives the driving force from the second locking protrusion 1834 and drives the latch member 182. The second boss 1824 is disposed on the first cam 1821, and the second boss 1824 extends along the axial direction of the first cam 1821 and protrudes from the surface of the first cam 1821 so that the second locking protrusion 1834 pushes the second boss 1824 during the rotation process, thereby driving the latch member 182 to move along the second direction F2 from the locked position to the saw blade replacement position.

In this example, as shown in FIGS. 1 and 14, the grip part 133 further includes a second handle 1333. The second handle 1333 is formed in front of the first handle 1331, and the second handle 1333 is formed above the first handle 1331. For example, when the first handle 1331 is pressed forward, the track saw 100 translates along the track 200. Furthermore, when the second handle 1333 is pressed downward, the sawing assembly 120 performs cutting downward relative to the base 110. For example, the operation of any handle may cause the track saw 100 to translate along the track 200. Additionally, the operation of any handle may cause the sawing assembly 120 to perform cutting relative to the base 110. As shown in FIG. 14, the lever handle 1831 is disposed below the second handle 1333, and the lever handle 1831 is disposed in front of the trigger 160.

As shown in FIGS. 12 and 16, a controller 171 for controlling the motor 122 is further included, the controller 171 is disposed on a control circuit board 170, and the control circuit board 170 includes a printed circuit board (PCB) and a flexible printed circuit (FPC) board. The controller 171 uses a dedicated control chip, for example, a single-chip microcomputer or a microcontroller unit (MCU). The controller 171 includes a processor and a memory, the processor is configured to be programmably controlled to implement respective functions, and the memory may store programs to be executed and related data. It is to be noted that the control chip may be integrated into the controller 171 or may be disposed independently of the controller 171. The structural relationship between a driver chip and the controller 171 is not limited in this example. The control circuit board 170 is disposed below the motor 122, the battery pack 30 is disposed behind the motor 122, and the battery pack 30 is disposed behind the control circuit board 170. In this example, a straight line perpendicular to the plane of the control circuit board 170 is defined as a third straight line 105, and a straight line in the insertion direction of the battery pack 30 is defined as a fourth straight line 106. When the orthographic projections are observed along the direction of the first axis 102, the third straight line 105 intersects with the fourth straight line 106. For example, the included angle α between the third straight line 105 and the fourth straight line 106 is less than 90°.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A cutting tool, comprising:
a base (110) comprising an upper surface (111) and a lower surface (112) that is opposite to the upper surface, and the lower surface defines a base plane (S1);
a sawing assembly (120) comprising a circular saw blade (121) defining a saw blade plane (S3) and a motor (122) for driving the circular saw blade to rotate; and
a bevel adjustment mechanism (140) for adjusting a lateral bevel angle (θ) of the sawing assembly relative to the base between a minimum angle and a maximum allowable angle;
wherein the bevel adjustment mechanism comprises a bracket plate (142) connected to the sawing assembly to move with the sawing assembly; and the bevel adjustment mechanism further comprises a locking member (143) operable to fix and release the bracket plate relative to the base at a desired lateral bevel angle; and an operating member (1411) connected to or formed with a limiting member (1413);
driven by the operating member, the limiting member has at least a first state, a second state, and a third state;
the bracket plate comprises a stop portion (1421) capable of being adapted to the limiting member in the first state or the second state to limit a first limit angle and a second limit angle of the sawing assembly relative to the base; and
when the limiting member is in the third state, the bevel adjustment mechanism limits a maximum lateral bevel angle of the sawing assembly relative to the base to a third limit angle, wherein the first limit angle is less than the second limit angle.

2. The cutting tool of claim 1, wherein the first limit angle is less than 45°.

3. The cutting tool of claim 1, wherein the third limit angle is greater than or equal to 46° and less than or equal to 60°.

4. The cutting tool of claim 1, wherein the second limit angle is less than the third limit angle.

5. The cutting tool of claim 1, further comprising a battery pack for supplying power to at least the motor.

6. The cutting tool of claim 1, wherein the operating member comprises a knob (1416), and a region near the operating member comprises at least three angle marks for indicating limit angles.

7. The cutting tool of claim 1, wherein the locking member is disposed on an outer periphery of the operating member.

8. The cutting tool of claim 6, wherein the operating member rotates about a second axis (103) to select a limit angle of the sawing assembly relative to the base.

9. The cutting tool of claim 8, wherein the limiting member comprises a first protrusion (1414) and a body portion (1415), the body portion is basically a flat plate structure, and the first protrusion protrudes from the body portion along a direction of the second axis.

10. The cutting tool of claim 9, wherein the stop portion mates with the first protrusion at different positions to limit the first limit angle and the second limit angle of the sawing assembly relative to the base.

11. The cutting tool of claim 1, wherein the locking member is connected to a locking rod (1431), and when the limiting member is in the third state, the locking rod is limited by one end of an arc-shaped sliding groove (1423) on the bracket plate to limit the third limit angle of the sawing assembly relative to the base.

12. The cutting tool of claim 11, wherein when the limiting member is in the third state, the stop portion is disengaged from the limiting member.

13. The cutting tool of claim 1, wherein the bevel adjustment mechanism further comprises a base plate (144) fixedly connected to the base, and the operating member is operably disposed on the base plate.

14. The cutting tool of claim 13, wherein the base plate is provided with joining portions for limiting a switching device (141) to three states, respectively.

15. The cutting tool of claim 1, wherein the sawing assembly is movably connected to the base between a first position and a second position, the circular saw blade at the first position does not protrude from the lower surface of the base, and the circular saw blade at the second position protrudes from the lower surface of the base; wherein the cutting tool further comprises a biasing member (1846) disposed between the sawing assembly and the base to bias the sawing assembly toward the first position.
